Europäisches Patentamt

**European Patent Office**

**Office européen des brevets**

(11) Numéro de publication: **0 203 643 B1**

# (12) FASCICULE DE BREVET EUROPEEN

(45) Date de publication du fascicule du brevet:
**17.10.90**

(21) Numéro de dépôt: **86200765.5**

(22) Date de dépôt: **02.05.86**

(51) Int. Cl.⁵: **A01C 1/06, A61J 3/00, A23G 3/26**

(54) **Dispositif d'enrobage.**

(30) Priorité: **15.05.85 FR 8507528**

(43) Date de publication de la demande:
**03.12.86 Bulletin 86/49**

(45) Mention de la délivrance du brevet:
**17.10.90 Bulletin 90/42**

(84) Etats contractants désignés:
**AT BE CH DE GB IT LI LU NL SE**

(56) Documents cités:
**DE-B- 1 226 867**
**FR-A- 450 429**
**US-A- 2 485 302**

(73) Titulaire: **SOLVAY & Cie (Société Anonyme), Rue du Prince Albert, 33, B-1050 Bruxelles(BE)**

(72) Inventeur: **Gago, Ignace, Chaussée de Nivelles, 53, B-1420 Braine-l'Alleud(BE)**
Inventeur: **Berwart, Emile, Route de Perwez, 72, B-5053 Liernu (Eghezée)(BE)**

(74) Mandataire: **Nichels, William et al, Solvay & Cie Département de la Propriété Industrielle Rue de Ransbeek, 310, B-1120 Bruxelles(BE)**

ACTORUM AG

## Description

La présente invention concerne un dispositif d'enrobage convenant particulièrement bien pour déposer une ou des couches régulières de substances d'enrobage sur des produits tels que des semences.

On a proposé dans le brevet FR-A 450 429 un appareil à enrober mécaniquement des noyaux pilulaires comportant une cuve orientée verticalement et permettant de combiner la pesanteur et la force centrifuge exercée par un mouvement de rotation autour d'un axe.

Dans cet appareil, la cuve effectue un mouvement continu de rotation planétaire autour d'un axe moteur parallèle à l'axe de la cuve et un mouvement d'oscillation sur elle-même sous l'action d'une tige fixée sur celle-ci.

On a également proposé, dans les brevets US 2 502 809 et 2 579 734, d'utiliser comme dispositif d'enrobage une cuve de forme généralement sphérique dans laquelle sont introduits les produits à enrober et les substances d'enrobage, la cuve étant animée d'un mouvement de rotation autour de son axe, qui peut être éventuellement incliné de façon à réaliser un mélange intime de son contenu.

Par ailleurs, il est connu, par la littérature (Annales de Gembloux, 1982, 88, 170-171), d'introduire de façon régulière les substances d'enrobage qui se présentent sous forme de poudres, dans la cuve d'enrobage durant sa rotation et de pulvériser à l'aide d'un pistolet un liant ou une colle qui fixe la ou les poudres sur les produits à enrober.

Ces techniques présentent toutefois des inconvénients.

Ainsi, si l'on accroît fortement la vitesse de rotation de la cuve, en vue de conférer une bonne résistance à l'enrobage, on constate que les produits à enrober ont tendance suite à la force centrifuge à être appliqués sur la paroi de la cuve et à tourner avec elle au lieu de rouler sur eux-mêmes; c'est-à-dire d'uniquement monter sur les parois de la cuve pour retomber en roulant les uns sur les autres. Ce phénomène qui rend l'enrobage défectueux, est particulièrement vérifié pour les produits à enrober de petit calibre ou légers.

Pour éviter cet inconvénient certains fabricants préconisent d'insérer dans la cuve des couteaux, des racloirs ou des butoirs de formes diverses en vue d'empêcher les produits à enrober de tourner avec la cuve. Ces moyens entraînent toutefois l'inconvénient de provoquer des chocs violents et d'accroître les risques de décollement de l'enrobage et de bris des produits à enrober. De plus, les substances d'enrobage, le liant et la colle se déposent au fur et à mesure de l'opération sur les couteaux, racloirs ou butoirs. Ceci entraîne une perte assez importante en matières premières non récupérables et peut aussi modifier défavorablement les pourcentages relatifs de substances d'enrobage, de produits à enrober et de liant.

En outre, dans les dispositifs d'enrobage connus on constate que des produits à enrober ayant une forme irrégulière, non sphérique, allongée, étoilée, plate, ellipsoïdale sont difficilement mis en rotation et ont plutôt tendance à glisser les uns sur les autres ce qui rend impossible un enrobage régulier.

Enfin, dans les techniques d'enrobage usuelles les produits enrobés doivent passer obligatoirement dans des cribles en vue d'obtenir des produits finis de calibre désiré, les produits enrobés irréguliers ou de calibre trop faible ou trop élevé étant éliminés, ce qui entraîne des pertes de matières.

La présente invention a pour objet un dispositif d'enrobage qui permet de pallier ces inconvénients.

A cet effet, la présente invention concerne un dispositif d'enrobage comportant au moins une cuve d'enrobage, destinée à recevoir des produits à enrober et des substances d'enrobage, et des moyens d'entraînement imposant à celle-ci un mouvement de rotation continu par rapport à son support autour d'un premier axe de rotation, ledit dispositif d'enrobage se caractérisant en ce que les moyens d'entraînement imposent en outre à l'ensemble cuve, support un mouvement simultané de rotation autour d'un second axe de rotation parallèle au premier axe de rotation.

La cuve d'enrobage peut se présenter sous diverses formes. Habituellement on utilise des cuves ayant une forme sphérique, cylindrique, ellipsoïdale ou une forme de sphère aplatie. La cuve d'enrobage comporte de préférence un fond plat et une paroi latérale raccordés entre eux par un arrondi en vue de favoriser la mise en rotation des produits à enrober.

La nature des matériaux utilisés pour la fabrication des cuves d'enrobage n'est pas critique en soi et dépend essentiellement de leur usage. Ainsi on peut réaliser des cuves d'enrobage en métal tel que l'acier inoxydable, en matière plastique ou toute autre matière adéquate. En outre, la paroi intérieure de la cuve peut avoir subi des traitements divers tels que notamment un traitement antiadhérent comme par exemple un revêtement par des polymères comme le polyfluorure de vinylidène. De préférence l'intérieur de la cuve ne doit présenter que des angles arrondis.

Enfin, la cuve d'enrobage peut être fixe ou amovible mais est de préférence amovible.

La contenance de la cuve n'est pas critique en soi et dépend essentiellement de la quantité de produits à enrober et de la quantité de substances d'enrobage à appliquer.

L'axe de rotation de la cuve d'enrobage peut être incliné d'un angle variant de 0 à 180° par rapport à la verticale par exemple en inclinant l'ensemble de l'appareillage, ce qui permet de bien répartir le volume de produits à enrober dans la cuve d'enrobage, c'est-à-dire d'augmenter la surface réceptive des produits à enrober et de favoriser la rotation de ceux-ci sur eux-même. L'inclinaison à conférer à l'axe est notamment fonction de la dimension et de la forme des produits à enrober; l'inclinaison au delà de 90° permet la vidange de la cuve.

Le dispositif d'enrobage selon l'invention comporte des moyens d'entraînement tel qu'un moteur de préférence à vitesse réglable imposant à la cuve d'enrobage un mouvement de rotation planétaire autour d'un axe parallèle à cet axe de rotation, cette rotation planétaire empêchant les produits à enrober de se maintenir sur la paroi appliqués par la force centrifuge qui est imposée par le mouvement de rotation de la cuve d'enrobage sur elle-même. De cette manière, les produits à enrober n'ont plus tendance à tourner avec la cuve d'enrobage.

Le dispositif d'enrobage selon l'invention comporte des moyens d'entraînement imposant à la cuve d'enrobage en outre un mouvement simultané de rotation sur elle-même afin de faire rouler les produits à enrober sur eux-mêmes et de mélanger de manière homogène les produits à enrober et les substances d'enrobage.

Les vitesses de rotation imposées par les moyens d'entraînement sont réglables; elles dépendent du dispositif d'enrobage, de la cuve d'enrobage et des produits à enrober.

Les moyens d'entraînement assurant le mouvement de rotation planétaire, peuvent être indépendants de ceux assurant le mouvement de rotation de la cuve autour de cet axe de rotation et être par exemple constitués par des moteurs indépendants à vitesse variable. Selon un mode de réalisation avantageux ces moyens peuvent être constitués par des jeux de poulies ou d'engrenages entraînés par le moteur assurant la mise en rotation de la cuve autour de son axe. Dans ce cas, le choix judicieux des diamètres des poulies ou des engrenages détermine le rapport des vitesses des mouvements de rotation et selon la disposition de la courroie, les diamètres relatifs des poulies, ou le nombre et le diamètre des engrenages utilisés. Les moyens d'entraînement peuvent imposer à la cuve d'enrobage des mouvements de rotation dans le même sens ou dans le sens opposé au sens du mouvement de rotation planétaire.

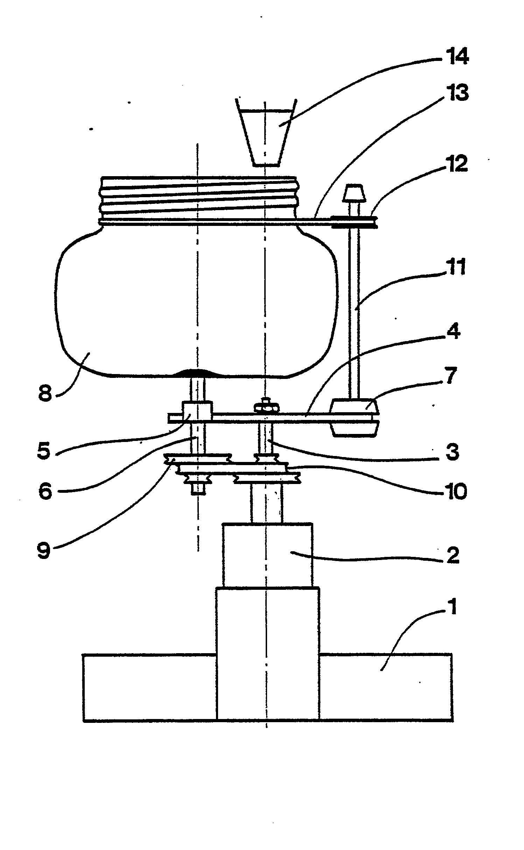

Un dispositif d'enrobage conforme à la présente invention est, par ailleurs, explicité plus en détail dans un mode de réalisation pratique qui va être décrit et pour la description duquel on se référera à la figure du dessin annexé.

Ainsi, qu'il apparaît sur la figure, le dispositif d'enrobage comporte un châssis support fixe 1 inclinable, un moteur rotatif 2 monté sur ce châssis-support 1 et qui constitue le moyen d'entraînement du dispositif d'enrobage.

L'arbre rotatif (3) matérialise le second axe de rotation.

L'extrémité de cet arbre rotatif 3 du moteur rotatif 2 est équipé d'un bras support 4 disposé en T; une extrémité de ce bras support 4 est pourvue d'un boîtier de roulement 5 dans lequel peut tourner librement un arbre 6 matérialisant le premier axe de rotation, parallèle à l'axe rotatif 3 du moteur rotatif 2; l'autre extrémité du bras support 4 est pourvue d'un balourd d'équilibrage 7.

Sur l'extrémité de l'arbre 6 est fixée une cuve d'enrobage 8 par la partie centrale de son fond.

Le dispositif de mise en rotation de l'arbre 6 est constitué d'un ensemble de poulies étagées 9 fixées sur cet arbre 6 en relation mécanique avec un second ensemble de poulies étagées fixes 10 montées sur le châssis support fixe 1.

L'extrémité du bras support 4 opposée au boîtier de roulement 5 est équipée d'un support 11 parallèle à l'arbre rotatif 3 du moteur 2. Ce support 11 qui s'étend jusqu'à la partie supérieure de la cuve d'enrobage 8, est pourvu à son extrémité d'une poulie folle 12 qui maintient une courroie 13 de rattrapage du porte-à-faux de la cuve d'enrobage 8, courroie que est engagée autour de la partie supérieure de la cuve d'enrobage.

Le dispositif d'enrobage selon l'invention peut être avantageusement équipé d'un motovariateur comme moteur rotatif dont la vitesse de rotation peut être réglée entre 25 et 250 tours par minute.

Le dispositif de mise en rotation de l'arbre 6 anime celui-ci d'une vitesse de rotation apparente qui en général peut varier de 0 à 500 tours par minute. Cette vitesse apparente dépend de la vitesse de rotation imposée par le motovariateur, du diamètre $D_2$ de la poulie mobile 9 et du diamètre $D_1$ de la poulie fixe 10. Par vitesse de rotation apparente on définit le nombre de tours de la cuve d'enrobage sur elle-même, qu'un observateur extérieur dénombre en un laps de temps donné. Dans le cas où les poulies 9 et 10 n'ont pas un diamètre extrêment différent, la vitesse de rotation apparente de la cuve peut être calculée par la formule

$$\frac{D_2 - D_1}{D_2}$$

× la vitesse de rotation due au mouvement planétaire.

Dans une réalisation préférée du dispositif d'enrobage selon l'invention l'excentrage entre l'axe de l'arbre rotatif 3 et l'axe de l'arbre 6 supportant la cuve d'enrobage est inférieur au rayon interne de l'ouverture de la cuve d'enrobage, ceci permet de placer au dessus de la cuve d'enrobage un dispositif fixe d'alimentation 14 de la cuve d'enrobage disposé dans l'axe de l'arbre rotatif 3. Ce dispositif fixe d'alimentation permet d'introduire des substances d'enrobage aisément en cours d'opération sans arrêter les mouvements de rotation et/ou de projeter un liant ou une colle par un dispositif fixe.

Dans une autre réalisation du dispositif d'enrobage selon l'invention l'excentrage entre l'axe de l'arbre rotatif 3 et l'axe de l'arbre 6 supportant la cuve d'enrobage est supérieur au rayon externe de la cuve d'enrobage. Cette réalisation permet d'équiper le dispositif d'une pluralité de cuves d'enrobage travaillant simultanément. Ainsi par exemple il est alors possible de remplacer le balourd d'équilibrage 7 par une cuve identique à la cuve 8, c'est-à-dire placée symétriquement à la première cuve d'enrobage par rapport à l'axe de l'arbre rotatif 3.

Le dispositif d'enrobage selon l'invention permet d'enrober des produits divers, tels que des noyaux, des semences, des graines, des fruits, des produits de confiserie, des dragées, des amandes, des pilules, des bonbons, des produits pharmaceutiques, etc.

Des illustrations pratiques sont décrites ci-après.

Ce dispositif d'enrobage selon l'invention permet en outre d'enrober des semences au moyen de matières telles que des matières nutritives, des charges, des fongicides, des herbicides, des insecticides, etc ... l'enrobage des semences visant à améliorer les caractéristiques de germination, à fournir divers additifs susceptibles d'intervenir à un moment quelconque de l'établissement et de la croissance des plantes, à protéger les semences ou encore à donner à la semence une forme ou une dimension qui convient bien pour le semis automatique. Un exemple concret se trouve dans la demande de brevet français n° 8319983 au nom de SOLVAY & Cie.

Des exécutions pratiques du dispositif d'enrobage selon l'invention permettent d'enrober des fruits au moyen de sucres, sirops, chocolat, cacao, colorants, additifs de confiserie, lécithine, produits aromatisants, poudre de lait, vanille naturelle ou artificielle, additif de conservation, etc ... ou en général d'enrober tout produit de confiserie en vue de réaliser des dragées, des bonbons ayant un calibre adéquat et/ou constitués de couches successives de produits différents disposées autour d'un noyau central.

De même, le dispositif d'enrobage selon l'invention peut être utilisé dans l'industrie pharmaceutique en vue de réaliser des dragées galéniques, des cachets multicouches, ou tout produit ou médicament pharmaceutique ou à usage vétérinaire.

Le dispositif d'enrobage selon l'invention permet notamment un enrobage très satisfaisant de produits à enrober de petit calibre, légers ou encore de formes irrégulières diverses. Le dispositif est doux et continu dans ses mouvements ce qui évite tout choc et élimine les risques de bris de l'enrobage ou du produit à enrober. Les pertes de matière sont évitées au maximum et les produits enrobés sont bien calibrés. Les produits enrobés obtenus avec le dispositif selon l'invention ont une forme sphérique régulière quelque soit leur forme initiale.

Le dispositif d'enrobage selon l'invention permet d'obtenir un excellent enrobage qui résiste bien à l'attrition, aux frottements, aux chocs, à l'abrasion. Cette résistance qui est donnée par la conjugaison de paramètres tels que le type de produits à enrober, les substances d'enrobage, le liant ou la colle employé, est également apportée par la force centrifuge appliquée au contenu de la cuve d'enrobage. Ainsi, plus la force centrifuge est grande, c'est-à-dire plus la vitesse de rotation de la cuve est élevée plus l'enrobage est compact et de bonne résistance à l'attrition. Dans le dispositif d'enrobage selon l'invention, des vitesses élevées peuvent être appliquées sans problème, les produits à enrober n'étant pas maintenus sur la paroi de la cuve, puisqu'ils subissent également la force résultante du mouvement planétaire qui les décolle de cette paroi et les fait tomber en roulant les uns sur les autres.

Les examples suivants illustrent l'invention.

Exemple 1

Un dispositif d'enrobage tel qu'illustré à la figure est équipé d'une cuve de contenance de 25 l possédant un fond plat et une paroi latérale raccordés entre eux par un arrondi.

La cuve est en acier inoxydable et présente les caractéristiques suivantes :

- diamètre de 370 mm,
- hauteur totale de 285 mm.

Le diamètre $D_2$ de la poulie mobile 9 est de 52 mm, celui $D_1$ de la poulie fixe 10 est de 57 mm.

L'excentrage entre l'arbre support de la cuve d'enrobage et l'axe de l'arbre rotatif s'élève à 110 mm, il est inférieur au rayon de la cuve d'enrobage.

200 g de semences de betteraves monogermes sont dépoussiérées, puis humectées au moyen d'une solution aqueuse (50 % de la solution composition A décrite ci-après) à raison de 12 ml de solution pour 100 g de semences.

Les semences humides sont ensuite introduites dans la cuve d'enrobage arrêtée.

L'ensemble du dispositif d'enrobage est ensuite incliné d'un angle de 40° par rapport à la verticale.

La vitesse de rotation du mouvement planétaire est réglée à 100 tours par minute. La vitesse de rotation apparente de la cuve d'enrobage sur elle-même est de 10 tours par minute.

Les sens des mouvements de rotation sont opposés.

Durant la rotation de la cuve on introduit par le dispositif fixe d'alimentation en trois poudrages successifs 900 g de charges minérales comprenant de la tourbe broyée, de la bentonite, du kaolin et du calcaire. Alternativement on pulvérise au total 880 ml d'une solution aqueuse d'agent collant (composition A contenant 42 g de polyvinylpyrrolidone, 126 g de sucre et 1832 g d'eau déminéralisée).

Ensuite on ajoute 48 g d'agent colorant (90 % de talc et 10 % d'oxyde ferrique).

Ces opérations demandent environ 3 heures.

Puis les semences sont séchées à l'étuve à 35°C pendant 16 heures.

Les semences ainsi obtenues sont prêtes à l'emploi.

Leur calibre est régulier et ne nécessite aucun tri, 34 % des semences enrobées ont un diamètre compris entre 4 et 4,75 mm, 66 % entre 3,4 et 4 mm.

Lors du bilan de matière aucune perte significative n'a été constatée, en particulier aucune semence n'a été brisée au cours de l'enrobage.

Les tests de germination réalisés ultérieurement à 20-22°C sur papier filtre et sur sable humide ont donné d'excellents résultats : 98 % des semences ont germé.

Exemple 2

On répète l'exemple 1 mais avec une cuve d'enrobage de contenance de 10 l.

Cette cuve d'enrobage a la forme d'une ellipsoïde dont la dimension du grand axe est de 270 mm, et celle du petit axe de 160 mm. Cette cuve d'enrobage est réalisée en matière plastique.

Les diamètres des poulies et l'excentrage entre l'arbre support de la cuve d'enrobage et l'axe de l'arbre rotatif sont identiques à ceux de l'exemple 1.

L'ensemble du dispositif d'enrobage est incliné d'un angle de 45° par rapport à la verticale.

5 g de semences de laitue sont dépoussiérées, puis humectées au moyen d'une solution aqueuse (50 % de la solution composition A) à raison de 12 ml de solution pour 100 g de semences.

La vitesse de rotation du mouvement planétaire est réglée à 90 tours par minute et la vitesse de rotation apparente de la cuve d'enrobage sur elle-même est de 9 tours par minute.

Les sens des mouvements de rotation sont opposés.

Les semences humides sont ensuite introduites dans la cuve d'enrobage arrêtée.

Durant la rotation de la cuve on introduit par le dispositif fixe d'alimentation 28 g de charges minérales comprenant du clarcel, du kaolin et de la silice. L'agent collant (14 ml) dont la composition est identique à celle de l'exemple 1, est pulvérisé régulièrement au cours de l'enrobage.

Ensuite on ajoute 2 g de kaolin pour lisser l'enrobage.

Ces opérations demandent environ 2 heures.

Après enrobage les semences sont séchées rapidement à température ambiante par de l'air pulsé par un ventilateur.

Les semences enrobées sont ultérieurement mises à germer dans de la terre humide. Les essais de germination ont été réalisés à environ 20°C, ces tests ont donné d'excellents résultats (100 % de germination).

Dans tous les cas l'enrobant adhère très bien aux semences et ne se décolle pas lors du conditionnement et de l'emploi des semences, c'est-à-dire sans fragilisation, ni délitage de l'enrobant.

Les semences enrobées de laitues qui ont été obtenues ont un calibre régulier.

Exemples 3 et 4

On répète l'exemple 2, mais en lieu et place de semences de laitues, on enrobe des semences de chicorées et de tomates.

Les tests de germination ont donné d'excellents résultats (90 à 100 % de germination).

Les semences enrobées obtenues ont un calibre régulier et sont bien sphériques, ce qui facilite le semis.

**Revendications**

1. Dispositif d'enrobage comportant au moins une cuve d'enrobage (8), destinée à recevoir des produits à enrober et des substances d'enrobage, et des moyens d'entraînement (2, 3, 6, 9, 10) imposant à celle-ci un mouvement de rotation continu par rapport à son support (4) autour d'un premier axe de rotation caractérisé en ce que les moyens d'entraînement (2, 3, 6, 9, 10) imposent en outre à l'ensemble cuve (8), support (4) un mouvement simultané de rotation autour d'un second axe de rotation parallèle au premier axe de rotation.

2. Dispositif d'enrobage selon la revendication 1 caractérisé en ce que les moyens d'entraînement (2, 3, 6, 9, 10) imposent à la cuve (8) un mouvement de rotation par rapport à son support (4) dans le même sens que celui du mouvement de rotation de l'ensemble cuve (8), support (4) autour du second axe de rotation.

3. Dispositif d'enrobage selon la revendication 1 caractérisé en ce que les moyens d'entraînement (2, 3, 6, 9, 10) imposent à la cuve (8) un mouvement de rotation par rapport à son support (4) dans le sens opposé au sens du mouvement de rotation de l'ensemble cuve (8), support (4) autour du second axe de rotation.

4. Dispositif d'enrobage selon l'une quelconque des revendications 1 à 3 caractérisé en ce que l'axe de rotation de la cuve d'enrobage (8) peut être incliné d'un angle variant de 0 à 180° par rapport à la verticale.

5. Dispositif d'enrobage selon l'une quelconque des revendications 1 à 4 caractérisé en ce que la cuve d'enrobage (8) comporte un fond plat et une paroi latérale raccordés entre eux par un arrondi.

6. Dispositif selon l'une quelconque des revendications 1 à 5 caractérisé en ce qu'il comporte un châssis support fixe (1), un moteur rotatif (2) monté sur ce châssis support fixe (1), un moteur rotatif (2) monté sur ce châssis-support (1) dont l'extrémité de l'arbre rotatif (3), matérialisant le second axe de rotation est équipé d'un support (4) en forme de bras disposé en T, une extrémité de ce bras support (4) étant pourvu d'un boîtier de roulement (5) dans lequel peut tourner librement un arbre (6) matérialisant le premier axe de rotation cet arbre (6) étant parallèle à l'arbre rotatif (3) du moteur (2) et dont l'autre extrémité est pourvu d'un balourd d'équilibrage (7), d'une cuve d'enrobage (8) fixée par la partie centrale de son fond sur l'extrémité de l'arbre (6) et un dispositif de mise en rotation de l'arbre (6) tel qu'un ensemble de poulies étagées (9) fixées sur cet arbre (6) en relation mécanique avec un second ensemble de poulies étagées fixes (10) montées sur le châssis support fixe (1).

7 - Dispositif selon la revendication 6 caractérisé en ce que l'extrémité du bras support (4) opposée au boîtier de roulement (5) est équipée d'un support (11) parallèle à l'arbre rotatif (3) du moteur (2) et s'étendant jusqu'à la partie supérieure de la cuve d'enrobage (8), ledit arbre étant pourvu à son extrémité d'une poulie folle (12) maintenant une courroie (13) de rattrapage du porte-à-faux de la cuve d'enrobage (8) qui est engagée autour de la partie supérieure de la cuve d'enrobage (8).

8 - Dispositif selon la revendication 6 ou 7 caractérisé en ce que le moteur rotatif (2) est un motovariateur dont la vitesse de rotation peut être réglée entre 25 et 250 tours par minute.

9 - Dispositif selon l'une quelconque des revendications 6 à 8 caractérisé en ce que le dispositif de mise en rotation de l'arbre (6) anime celui-ci d'une vitesse de rotation apparente pouvant varier de 0 à 500 tours par minute.

10 - Dispositif selon l'une quelconque des revendications 6 à 9 caractérisé en ce que l'excentrage entre l'axe de l'arbre rotatif (3) et l'axe de l'arbre (6) supportant la cuve d'enrobage est inférieur au rayon interne de l'ouverture de la cuve d'enrobage et en ce qu'il comporte un dispositif fixe d'alimentation (14) de la cuve d'enrobage disposé selon l'axe de l'arbre rotatif (3).

## Claims

1. Coating device comprising at least one coating vessel (8) intended to receive the products to be coated and the coating substances, and driving means (2, 3, 6, 9, 10) imparting to the vessel a continuous rotary motion relative to its carrier (4) about a first axis of rotation, characterized in that the driving means (2, 3, 6, 9, 10) also impart to the vessel (8) and carrier (4) system a simultaneous rotary motion about a second axis of rotation parallel to the first axis of rotation.

2. Coating device according to Claim 1, characterized in that the driving means (2, 3, 6, 9, 10) impart to the vessel (8) a rotary motion relative to its carrier (4) in the same direction as that of the rotary motion of the vessel (8) and carrier (4) system about the second axis of rotation.

3. Coating device according to Claim 1, characterized in that the driving means (2, 3, 6, 9, 10) impart to the vessel (8) a rotary motion relative to its carrier (4) in the direction opposite to the direction of the rotary motion of the vessel (8) and carrier (4) system about the second axis of rotation.

4. Coating device according to any one of Claims 1 to 3, characterized in that the axis of rotation of the coating vessel (8) may be tilted at an angle varying from 0 to 180° to the vertical.

5. Coating device according to any one of Claims 1 to 4, characterized in that the coating vessel (8) comprises a flat bottom and a side wall which are joined together by a fillet radius.

6. Device according to any one of Claims 1 to 5, characterized in that it comprises a fixed carrier frame (1), a rotary motor (2) mounted on this carrier frame (1) in which the end of the rotary shaft (3) embodying the second axis of rotation is equipped with a carrier (4) in the form of a T-shaped arm, one end of this carrier arm (4) being provided with a bearing casing (5) in which a shaft (6) embodying the first axis of rotation, this shaft (6) being parallel to the rotary shaft (3) of the motor (2), can turn freely and whose other end is provided with a balancing counterweight (7), a coating vessel (8) fixed by means of the central part of its bottom to the end of the shaft (6) and a device for rotating the shaft (6) such as a set of cone-pulleys (9) fixed to this shaft (6) in a mechanical relationship with a second set of fixed cone-pulleys (10) mounted on the fixed carrier frame (1).

7. Device according to Claim 6, characterized in that the end of the carrier arm (4) away from the bearing casing (5) is equipped with a carrier (11) parallel to the rotary shaft (3) of the motor (2) and extending to the upper part of the coating vessel (8), the said shaft being provided at its end with an idle pulley (12) supporting a belt (13) for retaining the overhang of the coating vessel (8) which is engaged around the upper part of the coating vessel (8).

8. Device according to Claim 6 or 7, characterized in that the rotary motor (2) is a variable-speed motor whose rate of rotation can be regulated between 25 and 250 revolutions per minute.

9. Device according to any one of Claims 6 to 8, characterized in that the device for rotating the shaft (6) drives the latter at an apparent rate of rotation which can vary from 0 to 500 revolutions per minute.

10. Device according to any one of Claims 6 to 9, characterized in that the eccentric distance between the axis of the rotary shaft (3) and the axis of the shaft (6) supporting the coating vessel is shorter than the inner radius of the opening of the coating vessel and in that it comprises a fixed device (14) for feeding the coating vessel, arranged on the axis of the rotary shaft (3).

## Patentansprüche

1. Pilliervorrichtung, umfassend wenigstens eine Pillierwanne (8), die dazu bestimmt ist, zu beschichtende Produkte und Beschichtungssubstanzen aufzunehmen, und Antriebsmittel (2, 3, 6, 9, 10), die dieser eine stetige Rotationsbewegung im Verhältnis zu ihrem Träger (4) um eine erste Rotationsachse auferlegen, dadurch gekennzeichnet, daß die Antriebsmittel (2, 3, 6, 9, 10) außerdem der Anordnung Wanne (8), Träger (4) eine gleichzeitige Rotationsbewegung um eine zweite Rotationsachse, die parallel zur ersten Rotationsachse ist, auferlegen.

2. Pilliervorrichtung nach Anspruch 1, dadurch gekennzeichnet, daß die Antriebsmittel (2, 3, 6, 9, 10) der Wanne (8) eine Rotationsbewegung im Verhältnis zu ihrem Träger (4) in der gleichen Richtung wie die Rotationsbewegung der Anordnung Wanne (8), Träger (4) um die zweite Rotationsachse auferlegen.

3. Pilliervorrichtung nach Anspruch 1, dadurch gekennzeichnet, daß die Antriebsmittel (2, 3, 6, 9, 10) der Wanne (8) eine Rotationsbewegung im Verhältnis zu ihrem Träger (4) in entgegengesetzter Richtung bezüglich der Rotationsbewegung der Anordnung Wanne (8), Träger (4) um die zweite Rotationsachse auferlegen.

4. Pilliervorrichtung nach einem der Ansprüche 1 bis 3, dadurch gekennzeichnet, daß die Rotationsachse der Pillierwanne (8) in einem Winkel zwischen 0 und 180° bezüglich der Vertikalen geneigt werden kann.

5. Pilliervorrichtung nach einem der Ansprüche 1 bis 4, dadurch gekennzeichnet, daß die Pillierwanne (8) einen ebenen Boden und eine Seitenwand umfaßt, die miteinander durch eine Rundung verbunden sind.

6. Pilliervorrichtung nach einem der Ansprüche 1 bis 5, dadurch gekennzeichnet, daß sie ein festes Gestell (1), einen Rotationsmotor (2), der an dem Gestell (1) angebracht ist, dessen Ende der Rotationswelle (3), die die zweite Rotationsachse verwirklicht, mit einem armförmigen Träger (4), der als T angeordnet ist, ausgestattet ist, wobei ein Ende dieses Tragarms (4) mit einem Rollager (5) versehen ist, in dem sich eine Welle (6), die die erste Rotationsachse verwirklicht, frei drehen kann, wobei diese Welle (6) parallel zu der Rotationswelle (3) des Motors (2) ist und dessen anderes Ende mit einer Ausgleichsunwucht (7) versehen ist, eine Pillierwanne (8), die mit dem Mittelteil ihres Bodens am Ende der Welle (6) angebracht ist, und eine Vorrichtung zur Rotationsbewegung der Welle (6), wie eine Anordnung von in Stufen angebrachten an dieser Welle (6) befestigten Scheiben (9), in mechanischer Beziehung mit einer zweiten Anordnung von in Stufen angeordneten Scheiben (10), die an dem festen Träger (1) angebracht sind, aufweist.

7. Pilliervorrichtung nach Anspruch 6, dadurch gekennzeichnet, daß das Ende des Tragarms (4), das dem Rollager (5) entgegengesetzt ist, mit einem Träger (11) ausgestattet ist, der parallel zu der Rotationswelle (3) des Motors (2) ist und sich bis zum oberen Teil der Pillierwanne (8) erstreckt, wobei diese Welle an ihrem Ende mit einer beweglichen Scheibe (12) versehen ist, die einen Treibriemen (13) zum Nachregulieren des Überhangs der Pillierwanne (8), der um das Oberteil der Pillierwanne (8) befestigt ist, trägt.

8. Vorrichtung nach Anspruch 6 oder 7, dadurch gekennzeichnet, das der Rotationsmotor (2) ein Drehzahlvariator ist, dessen Rotationsgeschwindigkeit zwischen 25 und 250 Umdrehungen pro Minute gesteuert werden kann.

9. Vorrichtung nach einem der Ansprüche 6 bis 8, dadurch gekennzeichnet, daß die Vorrichtung zur Rotationsbewegung der Welle (6) diese mit einer scheinbaren Rotationsgeschwindigkeit, die zwischen 0 und 500 Umdrehungen pro Minute variieren kann, antreibt.

10. Vorrichtung nach einem der Ansprüche 6 bis 9, dadurch gekennzeichnet, daß der Abstand zwischen der Achse der Rotationswelle (3) und der Achse der Welle (6), die die Pillierwanne trägt, kleiner ist als der Innenradius der Pillierwannenöffnung und, daß sie eine feste Zuführungsvorrichtung (14) der Pillierwanne umfaßt, die gemäß der Achse der Rotationswelle (3) angeordnet ist.